# EUROPÄISCHE PATENTANMELDUNG

(11) **EP 1 495 930 A2**
(43) Veröffentlichungstag der Anmeldung: **12.01.2005**
(21) Anmeldenummer: 04450142.7
(22) Anmeldetag: 08.07.2004
(51) Int. Cl.: B60S 3/04

(54) **Vorrichtung zur Reinigung von Nutzfahrzeugen**

(30) Priorität: 08.07.2003 AT 10532003
(71) Anmelder: Gruber, Alois, 5611 Grossarl 17 (AT)
(72) Erfinder: Gruber, Alois, 5611 Grossarl 17 (AT)
(74) Vertreter: Babeluk, Michael, Dipl.-Ing.

(57) **Zusammenfassung**

Die Erfindung betrifft eine Vorrichtung zur Reinigung von Nutzfahrzeugen, mit einer Fahrbahn (1), an die seitlich Seitenwände (2, 3) anschließen, um eine wannenförmige Durchfahrtsstrecke zu bilden, und mit einer Vielzahl von Düsen, um ein Reinigungsmedium unter Druck auf das zu reinigende Nutzfahrzeug zu spritzen. Eine verbesserte Funktion kann dadurch erreicht werden, dass an den Seitenwänden (2, 3) eine Gitterstruktur befestigt ist, die sich im Wesentlichen parallel zur Seitenwand erstreckt.

## Beschreibung

Die Erfindung betrifft eine Vorrichtung zur Reinigung von Nutzfahrzeugen, mit einer Fahrbahn, an die seitlich Seitenwände anschließen, um eine wannenförmige Durchfahrtsstrecke zu bilden, und mit einer Vielzahl von Düsen, um ein Reinigungsmedium unter Druck auf das zu reinigende Nutzfahrzeug zu spritzen.

Es ist ein vielfach auftretendes Problem, dass Baufahrzeuge nach dem Verlassen einer Baustelle, einer Schottergrube oder dgl., Schmutz auf öffentliche Straßen fördern, was die Verkehrssicherheit beeinträchtigt. Solchen Schmutz zu entfernen ist aufwendig und nur bedingt möglich, da dieser im Allgemeinen über größere Bereiche verteilt ist.

Um diese Probleme zu vermeiden, sind sogenannte Reifenwaschanlagen entwickelt worden, die insbesondere die Reifen solcher Nutzfahrzeuge reinigen. Aus der DE 44 14 187 A ist eine solche Reifenwaschanlage bekannt, die von den die Baustelle verlassenden Fahrzeugen durchfahren wird, wobei durch Düsen Wasser als Reinigungsmedium auf die Reifen und das Fahrgestell der Fahrzeuge gesprüht wird, um diese zu reinigen. Eine weitere bekannte Lösung ist in der DE 295 20 689 U beschrieben. Auch die US 6,358,330 B zeigt ein Lösung dieser Art.

Es hat sich jedoch herausgestellt, dass die Reinigung der Reifen allein nicht ausreicht, eine ausreichende Reinigung zu erzielen, die eine Verunreinigung von Straßenflächen sicher ausschließt. Aber auch das einfache Besprühen des gesamten Unterbaus ist zumeist nicht ausreichend. Der Unterbau von Nutzfahrzeugen ist im Allgemeinen relativ kompliziert strukturiert, so dass der Schmutz auf Flächen und Bauteilen verbleibt, die nach außen hin zumindest teilweise von anderen Bauteilen abgedeckt sind. Es ist daher bekannt geworden, die Düsen zumindest teilweise schräg zur Normalen auf die Seitenwände anzuordnen. Auf diese Weise können auch solche Fahrzeugteile gereinigt werden, die schwerer zugänglich sind.

Der verwendete Wasserdruck und die Ausrichtung der einzelnen Düsen ist bei herkömmlichen Anlagen durch den Wasserverlust beschränkt, der dadurch auftritt, dass das Wasser unkontrolliert aus der Anlage herausspritzt. Dieses Problem wird dadurch verschärft, dass die einzelnen Wasserstrahlen bei der Durchfahrt des zu reinigenden Fahrzeugs nicht immer auf dieses auftreffen, sondern teilweise an diesem vorbei oder durch dieses hindurch treten. Um zu vermeiden, dass solche Strahlen direkt aus der Anlage herausspritzen, ist es bei herkömmlichen Lösungen nur beschränkt möglich, nach oben gerichtete Düsen vorzusehen. Dadurch wird allerdings die Reinigungswirkung eingeschränkt.

Aber auch die Strahlen, die auf die Seitenwände auftreffen, führen bei der bekannten Lösung zu einem großen Wasserverlust, da die Strahlen auf den Seitenwänden zerstäubt werden.

Aufgabe der Erfindung ist es, diese Nachteile zu vermeiden und eine Vorrichtung zur Reinigung von Nutzfahrzeugen zu schaffen, die eine hohe Reinigungswirkung erzielt und gleichzeitig mit geringem Aufwand betreibbar ist. Insbesondere soll der Verbrauch an Reinigungsmedium möglichst gering sein. Weitere Anforderungen sind ein einfacher Aufbau und eine vielseitige Anwendbarkeit für verschiedene Fahrzeugtypen.

Erfindungsgemäß ist an den Seitenwänden eine Gitterstruktur befestigt, die sich im Wesentlichen parallel zur Seitenwand erstreckt. Wesentlich an der vorliegenden Erfindung ist, dass das Reinigungsmedium der auf die Seitenwände aufprallenden Stahlen nicht zerstäubt und aus der Anlage heraus abgelenkt wird, sondern nach dem Auftreffen im Wesentlich ruhig nach unten abfließt. Dadurch können einerseits die Verluste an Reinigungsmedium minimiert werden, und andererseits ist ein verbesserte und intensivere Reinigung möglich, da Strahlen mit einem höheren Druck angewendet werden können und größere Freiheitsgrade bei der Ausrichtung der Düsen bestehen. Randbedingung bleibt lediglich, dass auch die nicht auf das Fahrzeug auftreffenden Stahlen nicht über die Seitenwände hinaus gerichtet sein dürfen.

Die erfindungsgemäße Gitterstruktur kann aus einem beschränkt beweglichen Gitter aus Drahtelementen oder als starre Struktur ausgebildet sein. Im Allgemeinen erstreckt sich die Gitterstruktur in einer Ebene, es können aber auch mehrere Lagen übereinander vorgesehen sein.

Eine konstruktiv besonders begünstigte Ausführungsvariante sieht vor, dass die Seitenwände eine rahmenförmige Tragstruktur aufweisen, an der außen eine dichte Spritzwand befestigt ist und an der innen die Gitterstruktur angebracht ist. Dadurch sind keine besonderen Haltestrukturen für die Gitterstruktur erforderlich, und es wird ein kompakter Aufbau erreicht.

Eine besondere Flexibilität der Anlage kann dadurch erreicht werden, dass die Seitenwände mehrteilig ausgeführt sind, mit einem unteren, fest mit der Fahrbahn verbundenen Abschnitt und mit mindestens einem auf den unteren Abschnitt aufsteckbaren, entfernbaren Abschnitt. Auf diese Weise ist es möglich, auch Fahrzeuge mit ausladenden Aufbauten zu reinigen, die durch den normalen Querschnitt der Anlage nicht oder nur erschwert hindurchfahren können. Auch für Reinigungs- und Wartungsarbeiten ist die Variante mit aufsteckbaren Abschnitten besonders vorteilhaft.

Besonders günstig ist es in diesem Zusammenhang, wenn der aufsteckbare, entfernbare Abschnitt nach außen zurückspringend ausgebildet ist. Kollisionen mit der Anlage können dadurch auch bei rauem Betrieb sicher vermieden werden.

Eine besonders hohe Wirksamkeit der Erfindung wird erzielt, wenn die Gitterstruktur eine Teilung in einem Bereich von 4 mm bis 20 mm aufweist und wenn sie einen flächenmäßigen Anteil an Öffnungen zwischen 50% und 80% aufweist. Günstig hat sich beispielsweise die Verwendung eines handelsüblichen Drahtgitters mit einer Maschenweite zwischen 6 mm und 8 mm herausgestellt. Es hat sich herausgestellt, dass eine Teilung, d.h. ein Rasterabstand in der Größenordnung des Strahldurchmessers oder etwas darunter besonders vorteilhaft ist. Dabei sollte der Öffnungsquerschnitt überwiegen, d.h., dass die Abmessungen der Öffnungen groß sind im Vergleich zu der Breite der Stege dazwischen.

Eine besonders gute Reinigungswirkung wird dadurch erreicht, dass eine erste Gruppe von Düsen an der Seitenwand geneigt sind. Insbesondere günstig ist es, wenn die Düsen der ersten Gruppe zumindest teilweise in einem vorbestimmten Winkel gegenüber einer Normalen auf die Ebene der Seitenwand, vorzugsweise teilweise nach oben gerichtet, befestigt sind. So werden auch erschwert zugängliche Winkel und Bereiche von Fahrzeugen zuverlässig gereinigt. Der Unterboden wird insbesondere dadurch gut gereinigt, dass eine zweite Gruppe von Düsen im Bereich der Fahrbahn befestigt ist.

Durch die bei der Reinigung auftretenden Sprühnebel können die Sichtverhältnisse für den Fahrer des zu reinigenden Fahrzeugs unzureichend sein, so dass es möglich ist, dass das Fahrzeug von der Idealspur seitlich abkommt. Eine Kollision mit den Seitenwänden kann dadurch vermieden werden, dass im Bereich des Übergangs von der Fahrbahn zur Seitenwand eine Führungsleiste vorgesehen ist. Diese Führungsleiste weist die lenkbaren Räder des Fahrzeugs ab, wenn dieses zu nahe an die Seitenwände heranfährt. Außerdem wird durch die Führungsleiste die Stabilität der Vorrichtung verbessert.

Eine oftmalige Wiederverwendung des Reinigungsmediums kann dadurch erreicht werden, dass ein Absetzbecken zur Aufnahme des abfließenden Reinigungsmediums vorgesehen ist. Vorzugsweise ist das Absetzbecken unterhalb der Fahrbahn angeordnet. Alternativ dazu kann das Absetzbecken neben der Fahrbahn vorgesehen sein. Dabei ist auch eine mobile Ausführung möglich, d.h., dass ein aus Stahl gefertigtes Becken vorgesehen ist, das per LKW transportierbar ist.

Eine automatische Steuerung der Anlage kann dadurch erreicht werden, dass Lichtschranken oder Induktionsschleifen zur Steuerung der Zufuhr des Reinigungsmediums vorgesehen sind. Durch Schranken oder Ampeln kann dabei eine zu schnelle Durchfahrt des Fahrzeugs verhindert werden, die eine unzureichende Reinigung zur Folge hätte.

Ein Einfrieren im Winter kann zuverlässig dadurch verhindert werden, dass beheizbare Düsen sowie beheizbare Wasserzufuhrrohre vorgesehen sind. Dies kann beispielsweise über elektrische Heizbänder erfolgen. Die Bildung von Glatteis am Ende der Anlage kann durch eine Straßenheizung verhindert werden.

Auch bei der erfindungsgemäßen Lösung kann ein gewisser Wasserverlust nicht verhindert werden. Die Nachspeisung erfolgt in besonders bevorzugter Weise dadurch, dass eine mit Frischwasser angespeiste Düsengruppe zur Reinigung des Fahrerhauses vorgesehen ist. So können die Windschutzscheibe und andere kritische Teile mit ganz sauberem Wasser gereinigt werden, wobei das zugeführte Frischwasser gerade den Wasserverlust ausgleicht. Diese Düsengruppe kann auch zur abschließenden Nachbebrausung des gesamten Fahrzeugs ausgebildet sein, um auch eine ästhetisch optimale Reinigung zu erreichen.

In der Folge wird die Erfindung anhand der in den Figuren darstellten Ausführungsvarianten näher erläutert. Es zeigen:
- Fig. 1: eine axonometrische Ansicht einer erfindungsgemäßen Vorrichtung,
- Fig. 2: die Düsen samt Wasserversorgung der Anlage von Fig. 1,
- Fig. 3: einen Querschnitt durch die Anlage; und
- Fig. 4: eine Draufsicht auf die Gitterstruktur der Seitenwände.

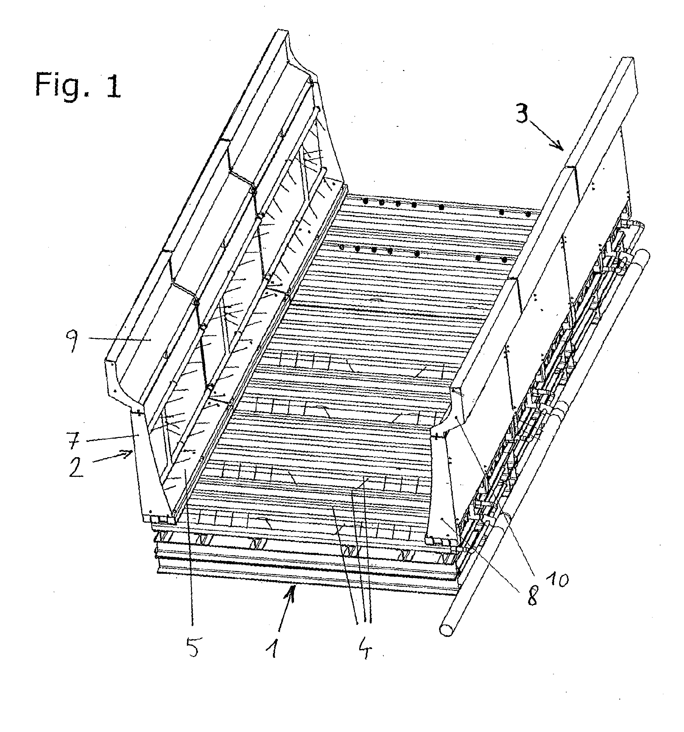

Die Vorrichtung von Fig. 1 besteht aus einer Fahrbahn 1, an die Seitenwände 2 und 3 anschließen. Die Fahrbahn 1 besteht aus einer Vielzahl von quer zur Fahrtrichtung angeordneten Trägern 4, zwischen denen Abstände vorgesehen sind, durch die das als Reinigungsmedium verwendete Wasser abfließen kann.

Die Seitenwände 2 und 3 sind über Führungsleisten 5 und 6 an der Fahrbahn 1 befestigt, die gleichzeitig einen Anfahrschutz darstellen.

Die Seitenwände 2, 3 bestehen aus einem unteren, fest mit der Fahrbahn 1 verbundenen Abschnitt 7, 8 und aus einem oberen, aufsteckbaren Abschnitt 9, 10, der zurückspringend ausgebildet ist, um den Durchfahrtsquerschnitt entsprechend zu erhöhen.

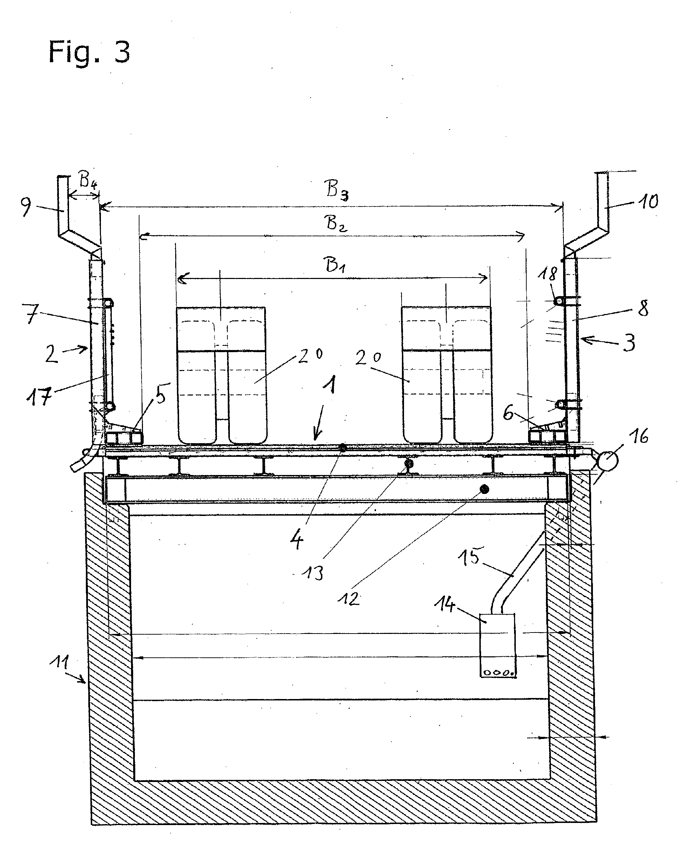

Aus Fig. 3 ist ersichtlich, dass die Fahrbahn 1 auf einem Absetzbecken 11 gelagert ist, das aus Stahlbeton ausgeführt und versenkt angeordnet ist. Profilträger 12, auf denen Längsträger 13 angeordnet sind, decken das Absetzbecken 11 ab. Durch die Träger 4 und die Profilträger 12, sowie die Längsträger 13 kann das Reinigungsmedium direkt in das Absetzbecken 11 abfließen. Nicht dargestellte Schwallbleche unterdrücken Strömungsbewegungen im Absetzbecken 11, so dass sich das abgewaschene Schmutz absetzen kann. Eine Förderpumpe 14, die beispielsweise als Tauchpumpe ausgebildet ist, entnimmt dem Absetzbecken 11 das für die Reinigung erforderliche Wasser bzw. Reinigungsmedium.

Wenn ein Wasseranschluss vorhanden ist, kann das mit den Fahrzeugen ausgetragene Reinigungsmedium in bekannter Weise über einen nicht dargestellten Schwimmerschalter nachdosiert werden. Ansonsten muss bei Unterschreiten eines Mindestpegels über einen Tankwagen nachdosiert werden. Wenn die abgelagerten Sedimente eine vorbestimmte Menge überschreiten, was bei normalem Betrieb nach einigen Wochen oder Monaten der Fall ist, wird der obere Teil der Anlage von dem Absetzbecken 11 heruntergehoben, um dieses ausbaggern zu können.

Falls es die örtlichen Verhältnisse nicht erlauben, das Absetzbecken 11 unter der Anlage anzuordnen, kann dieses auch neben der eigentliche Anlage im Hochbau errichtet werden. In diesem Fall ist unter der Fahrbahn 1 nur eine Auffangwanne vorgesehen, aus der das abgelaufene Reinigungsmedium in das Absetzbecken 11 gepumpt wird. In diesem Fall kann das Absetzbecken 11 auch aus Kunststoff ausgeführt sein, was für kleinere Anlagen oder mobile Anlagen vorteilhaft ist.

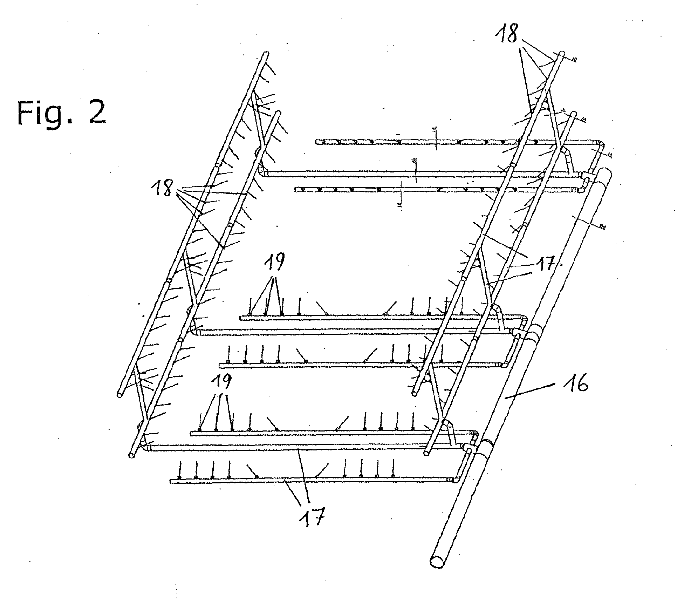

Die Förderpumpe 14 fördert das Reinigungsmedium über ein Verbindungsrohr 15 in ein parallel zur Längsachse angeordnetes Verteilrohr 16, von dem eine Vielzahl von weiteren Rohren 17 abzweigen, die Düsen 18, 19 versorgen. Eine erste Gruppe von Düsen 18 ist im Bereich der Seitenwände 2, 3 angeordnet. Diese Düsen 18 sind nur zum Teil senkrecht zu den Seitenwänden 2, 3 orientiert, die Mehrzahl der Düsen 18 ist in Fahrtrichtung, gegen die Fahrtrichtung, nach oben oder nach unten geneigt. In Fig. 2 ist die unterschiedliche Ausrichtung der Düsen 18 durch kurze Strahlabschnitte angedeutet. Im Bereich der Fahrbahn 1 ist eine zweite Gruppe von Düsen 19 angeordnet, die durch die Abstände zwischen den Trägern 4 hindurchspritzen. Auch diese Düsen 19 sind zum Großteil seitlich bzw. in oder gegen die Fahrtrichtung geneigt.

Aus Fig. 3 sind weiters die typischen Abmessungen der erfindungsgemäßen Anlage ersichtlich. Mit 20 sind die Räder eines zu reinigenden Fahrzeugs angedeutet. B₁ ist die typische Breite eines für den Straßenverkehr zugelassenen Baufahrzeugs, also 2.500 mm. Mit B₂ ist der Abstand zwischen den Führungsleisten 5 und 6 bezeichnet, der beispielsweise 3.000 mm beträgt. Die lichte Weite B₃ zwischen den fest mit der Fahrbahn 1 verbundenen Abschnitten 7, 8 beträgt etwa 3.500 mm, so dass ein ausreichender Freiraum zum Fahrzeug hin verbleibt. Jeder der oberen, aufsteckbaren Abschnitte 9, 10 springt mit B₄ um etwa 500 mm zurück.

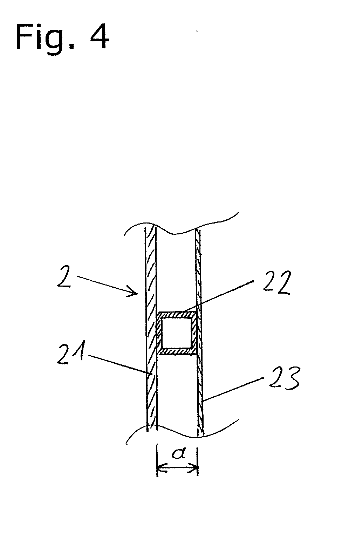

Aus Fig. 4 ist der Aufbau der Seitenwand 2 ersichtlich. Eine Wasserdichte Spritzwand 21 aus Blech wird von senkrechten Trägern 22 gehalten, die die Tragstruktur bilden. Auf der Innenseite ist eine Gitterstruktur 23 in der Form eines Drahtgitters von 8 mm Maschenweite befestigt. Der Abstand des Drahtgitters 23 von der Spritzwand 21 ist durch die Dicke a der Träger 22 gegeben und beträgt beispielsweise 60 mm. Die Seitenwand 3 sind analog aufgebaut.

Mit der vorliegenden Erfindung ist es möglich, eine sorgfältige Reinigung bei minimalem Wasserverbrauch zu gewährleisten.

## Patentansprüche

1. Vorrichtung zur Reinigung von Nutzfahrzeugen, mit einer Fahrbahn (1), an die seitlich Seitenwände (2, 3) anschließen, um eine wannenförmige Durchfahrtsstrecke zu bilden, und mit einer Vielzahl von Düsen (18, 19), um ein Reinigungsmedium unter Druck auf das zu reinigende Nutzfahrzeug zu spritzen, **dadurch gekennzeichnet, dass** an den Seitenwänden (2, 3) eine Gitterstruktur (23) befestigt ist, die sich im Wesentlichen parallel zur Seitenwand (2, 3) erstreckt.

2. Vorrichtung nach Anspruch 1, **dadurch gekennzeichnet, dass** die Seitenwände (2, 3) eine rahmenförmige Tragstruktur (22) aufweisen, an der außen eine dichte Spritzwand (21) befestigt ist und an der innen die Gitterstruktur (23) angebracht ist.

3. Vorrichtung nach Anspruch 1 oder 2, **dadurch gekennzeichnet, dass** die Seitenwände (2, 3) mehrteilig ausgeführt sind, mit einem unteren, fest mit der Fahrbahn (1) verbundenen Abschnitt (7, 8) und mit mindestens einem auf den unteren Abschnitt (7, 8) aufsteckbaren, entfernbaren Abschnitt (9, 10).

4. Vorrichtung nach Anspruch 3, **dadurch gekennzeichnet, dass** der aufsteckbare, entfernbare Abschnitt (9, 10) nach außen zurückspringend ausgebildet ist.

5. Vorrichtung nach einem der Ansprüche 1 bis 4, **dadurch gekennzeichnet, dass** die Gitterstruktur (23) eine Teilung in einem Bereich von 4 mm bis 20 mm, vorzugsweise 6 mm bis 8 mm aufweist.

6. Vorrichtung nach einem der Ansprüche 1 bis 5, **dadurch gekennzeichnet, dass** die Gitterstruktur einen flächenmäßigen Anteil an Öffnungen zwischen 50% und 80% aufweist.

7. Vorrichtung nach einem der Ansprüche 1 bis 6, **dadurch gekennzeichnet, dass** eine erste Gruppe von Düsen (18) an der Seitenwand (2, 3) geneigt sind.

8. Vorrichtung nach Anspruch 7, **dadurch gekennzeichnet, dass** die Düsen (18) der ersten Gruppe zumindest teilweise in einem vorbestimmten Winkel, der vorzugsweise zwischen 15° und 45° liegt, gegenüber einer Normalen auf die Ebene der Seitenwand (2, 3), besonders vorzugsweise teilweise nach oben gerichtet, befestigt sind.

9. Vorrichtung nach einem der Ansprüche 1 bis 8, **dadurch gekennzeichnet, dass** eine zweite Gruppe von Düsen (19) im Bereich der Fahrbahn (1) befestigt ist.

10. Vorrichtung nach einem der Ansprüche 1 bis 9, **dadurch gekennzeichnet, dass** im Bereich des Übergangs von der Fahrbahn (1) zur Seitenwand (2, 3) eine Führungsleiste (5, 6) vorgesehen ist.

11. Vorrichtung nach einem der Ansprüche 1 bis 10, **dadurch gekennzeichnet, dass** ein Absetzbecken zur Aufnahme des abfließenden Reinigungsmediums vorgesehen ist.

12. Vorrichtung nach Anspruch 11, **dadurch gekennzeichnet, dass** das Absetzbecken (11) unterhalb der Fahrbahn (1) vorgesehen ist.

13. Vorrichtung nach Anspruch 11, **dadurch gekennzeichnet, dass** das Absetzbecken neben der Fahrbahn (1) vorgesehen ist.

14. Vorrichtung nach einem der Ansprüche 1 bis 13, **dadurch gekennzeichnet, dass** Lichtschranken oder Induktionsschleifen zur Steuerung der Zufuhr des Reinigungsmediums vorgesehen sind.

15. Vorrichtung nach einem der Ansprüche 1 bis 14, **dadurch gekennzeichnet, dass** beheizbare Düsen (18, 19) bzw. Rohrleitungen zur Wasserzufuhr vorgesehen sind.

16. Vorrichtung nach einem der Ansprüche 1 bis 15, **dadurch gekennzeichnet, dass** eine mit Frischwasser angespeiste Düsengruppe zur Reinigung des Fahrerhauses vorgesehen ist.
